# EUROPEAN PATENT SPECIFICATION

(11) **EP 3 523 611 B1**
(45) Date of publication and mention of the grant of the patent: **30.12.2020**
(21) Application number: 17717437.2
(22) Date of filing: 13.04.2017
(51) Int. Cl.: G01F 23/296, G01S 7/521, G01S 15/10, G01S 15/88

(54) **DEVICE AND METHOD FOR MEASURING A LEVEL OF A FLUID IN A CONTAINER**
SYSTEM UND VERFAHREN ZUM MESSEN EINES PEGELS EINER FLÜSSIGKEIT IN EINEM BEHÄLTER
DISPOSITIF ET PROCÉDÉ DE MESURE DU NIVEAU D'UN FLUIDE DANS UN RÉCIPIENT

(30) Priority: 07.10.2016 GB 201617028
(43) Date of publication of application: 14.08.2019
(73) Proprietor: Vitesco Technologies GmbH, 30165 Hannover (DE)
(72) Inventor: PFEIFFER, Karl-Friedrich, 91058 Erlangen (DE); ROTH, Manfred, 90613 Grosshabersdorf (DE); MEZULIAN, Frantisek, 736 01 Havirov-Podlesi (CZ); PACHOMOV, Andrej, 74221 Koprivnice (CZ)
(74) Representative: Waldmann, Georg Alexander
(86) International application number: PCT/EP2017/059026
(87) International publication number: WO 2018/065128

(56) References cited:
- DE-A1-102005 043 263
- DE-A1-102012 014 307
- US-A- 5 410 518
- US-A1- 2008 184 794
- US-A1- 2010 126 267
- US-A1- 2016 116 324
- DROBRINSKI H ET AL: "COMBI-SENSOR LEVEL AND OIL QUALITY MANAGEMENT", SAE TECHNICAL PAPER SERIES, SOCIETY OF AUTOMOTIVE ENGINEERS, WARRENDALE, PA, US, no. 2008-01-0906, 14 April 2008 (2008-04-14), pages 1-13, XP002517017, ISSN: 0148-7191

## Description

### Field of the Invention

The present invention relates to a device according to the preamble of claim 1, and a method according to the preamble of claim 10, for measuring a level of a fluid in a container.

### Description of the Prior Art

Such device and such method are known from DE 10 2012 014 307 A1. According to this prior art, a sensor device for measuring a fluid level in a motor vehicle comprises:
- an ultrasonic oscillator for transmitting an ultrasonic pulse into the fluid and for receiving an echo of the ultrasonic pulse caused by reflection of the ultrasonic wave at a surface of the fluid, and
- an electronic semiconductor circuit arrangement for controlling the transmission of the ultrasonic pulse by providing a control signal to the ultrasonic oscillator and for analysing a reception signal provided by the ultrasonic oscillator due to the receipt of the echo,

wherein the ultrasonic oscillator and the electronic semiconductor circuit arrangement are combined in a packaged module provided with a plurality of electrical contact elements protruding from an enclosure of the packaged module.

A practical problem in using such a sensor device is e.g. the fluid tightness of the container filled with the fluid as well as the fluid tightness of the sensor device as such, so that a proper operation without electrical short circuits or other adverse effects is safeguarded.

Further, especially in using such device in harsh environments as e.g. in a motor vehicle, in which mechanical vibrations and/or temperature variations act on the device, there may occur problems with the proper positioning and/or proper operation of the device within the container.

A combi-sensor for all level and oil quality management is disclosed in Dobrinski, et al, - "Combi-sensor for Oil Level and Oil Quality Mangement" SAE technical paper series, Society of Automotive Engeneers, Warrendale, PA, US, no. 2008-01-0906, 14 April 2008, pages 1-13.

### Summary of the Invention

It is an object of the present invention, to provide a device and a method of the type mentioned already at the beginning, by means of which a reliable operation can be achieved also in harsh environments, without a need for a complicated structure of the device and/or a cumbersome installation of the device into the respective application environment.

According to the present invention, this object is solved by a device according to claim 1 and a method according to claim 10, respectively. The dependent claims are directed to advantageous further developments of the invention.

Firstly, the device according to the invention further comprises a housing (distinct from the enclosure of the packaged module), which can provide a protection of the packaged module and thus an additional protection for the components comprised by the packaged module.

Secondly, the acoustically active component (as e.g. an ultrasonic oscillator) is acoustically coupled to the housing so that the sound pulse is only transmitted through the housing to the fluid beyond the housing and the echo is received through the housing. In a very simple embodiment, such acoustic coupling can be achieved by a direct contact between the packaged module and/or the acoustically component comprised thereof on the one hand and a respective portion of the housing on the other hand. Preferably, such direct contact is a two-dimensionally extensive contact, e.g. via a contact interface area as big as a lateral dimension of the acoustically active component (or bigger) .

Thirdly, said housing is provided with electrical conductors (e.g. made of metal) embedded in or attached to the housing, wherein the electrical contact elements ("leads" or "pins", e.g. made of metal) of the packaged module are electrically connected to the electrical conductors of the housing. In a simple embodiment, the electrical contact elements of the packaged module are electrically connected by means of soldering or welding. Alternatively, such connection may be realized e.g. by means of gluing with an electrically conductive glue.

With the invention, it is possible to provide a reliably operating fluid level sensor based on an acoustic measurement principle, as e.g. sending out a sound pulse, e.g. ultrasonic pulse, receiving an echo, and determining (e.g. calculating) the level of the fluid based on the time of flight of the echo.

Besides the acoustically active component, the device comprises the electronic circuit arrangement having at least electronic components for control signal generation and reception signal processing, wherein the signal processing may comprise an analysis of the reception signal up to the outputting of a signal or data signal, respectively, representing the measured level of the fluid.

The combination of these components in a packaged module advantageously reduces the number of components to handle during the manufacturing of the sensor device and allows for a simple realization of the necessary mechanical and electrical interconnections between the components.

The electronic circuit arrangement can also comprise passive electrical components (e.g. resistors, capacitors etc.), which in this case are also integrated in the packaged module.

The plurality of electrical contact elements protruding from an enclosure of the packaged module enable e.g. an electrical power supply of the device and/or an inputting/outputting of other signals (e.g. control signals for controlling the operation of the device and/or sensor signals representing a result of the measurement conducted by the device).

The packaged module may be designed as a so-called "System in Package" (SiP) and/or a so-called "Multi-Chip Module" (MCM).

In an embodiment, the acoustically active component comprises a piezoelectric disc. Such a piezoelectric disc is for example well-suited for transmitting and receiving ultrasonic sound pulses.

According to an embodiment, the sound pulse is an ultrasonic sound pulse.

According to an embodiment, the housing is made of plastic.

In an embodiment, the device further comprises an acoustic coupling layer positioned between the enclosure of the packaged module and the housing.

It is advantageous, particularly in this case, when the enclosure of the packaged module is cuboid-shaped (as e.g. usual "integrated circuits" (ICs) are shaped) wherein the electrical contact elements protrude from a circumference of the housing, and wherein the acoustic coupling is accomplished between the "bottom side" of the packaged module and a respective portion (preferably flat surface portion) of the housing. The bottom side of the packaged module is the (preferably flat) side of the enclosure facing the housing.

Preferably, the lateral dimension (area) of the acoustic coupling layer is as big as a lateral dimension of the acoustically active component (or bigger).

In an embodiment, the acoustic coupling layer is made of an adhesive. In this case, the adhesive is advantageously also a means for realizing or contributing to mechanically secure the packaged module to the housing.

In an embodiment, the acoustic coupling layer is made of a gel-like substance.

In an embodiment, the acoustic coupling layer is made of rubber (e.g. silicone rubber).

In an embodiment, the electrical contact elements are electrically connected to the electrical conductors by means of welding, soldering, or gluing with an electrically conductive glue. Gluing and especially welding can advantageously also realize or contribute to secure the packaged module to the housing.

As explained above, the acoustic coupling and/or the electrical connection can provide also the function to secure the packaged module mechanically to the housing. However, if such mechanical fixation achieved by the electrical connection, and as the case may be also by the acoustic coupling, is not stable enough, the device according to the invention may further comprise (additional) means for achieving a mechanical fixation of the packaged module to the housing.

Such additional mechanical fixation means or mechanical fixation, respectively, may comprise e.g. a further gluing (e.g. outside the acoustic active area), snap-fit hooks, hot stamping, ultrasonic welding etc.

A lateral positioning of the packaged module in the housing can be achieved e.g. by using the electrical conductors of the housing and/or e.g. visual markers to align the packaged module. Alternatively such positioning can e.g. be achieved by using mechanical means directly connected to the housing, e.g. guidance pins or catches, with which respective contours of the module can be aligned.

### Brief Description of the Drawings

The invention will now be described in more detail by way of example embodiments with reference to the accompanying drawings, in which
- Fig. 1: is a side view of a sensor device according to an embodiment or the invention, and
- Fig. 2: is a top view of the sensor device of Fig. 1.

### Description of the Preferred Embodiments

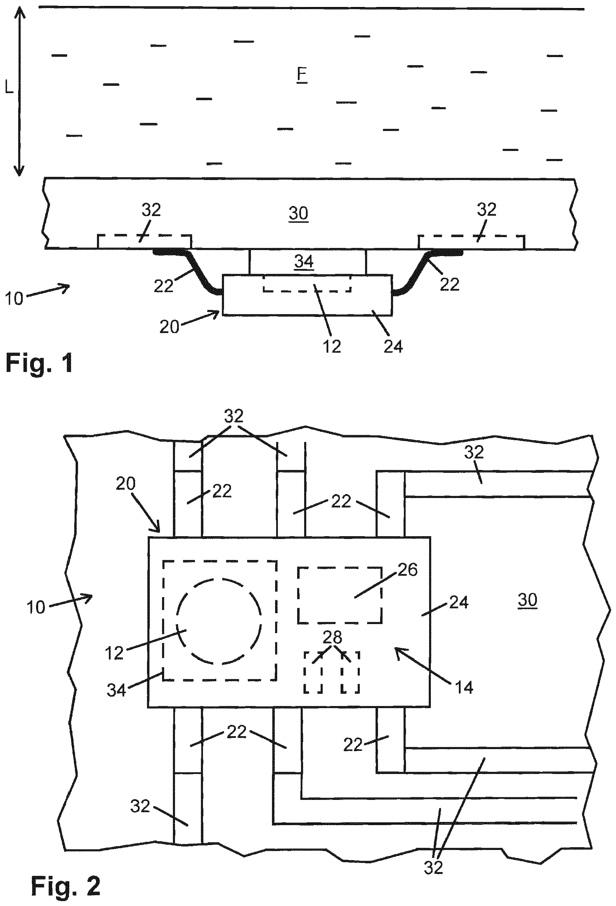

Figs. 1 and 2 show a device 10 for measuring a level L of a fluid F in a container. The device 10 comprises:
- an acoustically active component 12 for transmitting a sound pulse into the fluid F and for receiving an echo of the sound pulse, and
- an electronic circuit arrangement 14 for controlling the transmission of the sound pulse by providing a control signal to the acoustically active component 12 and for processing a reception signal provided by the acoustically active component 12 due to the receipt of the echo.

The acoustically active component 12 and the electronic circuit arrangement 14 are combined in a packaged module 20 provided with a plurality of electrical contact elements 22 protruding from an enclosure 24 of the packaged module 20.

In the shown embodiment the electronic circuit arrangement 14 comprises a semiconductor chip 26 and electrical passive components 28 (e.g. resistors, capacitors etc.), which are electrically interconnected and connected to the acoustically active component 12 in any suitable manner (as e.g. known from the prior art of packaged modules as "SiP" or "MCM").

In the shown example, the enclosure 24 is made of resin and has a cuboid shape with the electrical contact elements 22 protruding from a circumference of the module 20.

The device 10 further comprises a housing 30 provided with electrical conductors 32 embedded in the housing 30, wherein the acoustically active component 12 is acoustically coupled to the housing 30 so that the sound pulse is transmitted through the housing 30 to the fluid F beyond the housing 30 and the echo is received through the housing 30, and wherein the electrical contact elements 22 of the packaged module 20 are electrically connected to the electrical conductors 32 of the housing 30.

In the shown example, the acoustically active component 12 is implemented as a piezoelectric disc which is controlled by a control voltage for sending out ultrasonic sound pulses.

The housing 30 is made of plastic and may e.g. constitute a portion of the container, in which the fluid F is contained, or may be a housing which is positioned in such a container.

In the shown example, the device further comprises an (acoustically transmittive) acoustic coupling layer 34 positioned between the enclosure 24 and the housing 30, wherein the coupling layer 34 e.g. is made of an adhesive, so that this realization of the acoustic coupling additionally contributes to the mechanical fixation of the packaged module 20 to the housing 30.

In the shown example the electrical contact elements 22 of the packaged module 20 are welded to the electrical conductors 32 of the housing 30, which provides a further mechanical stabilisation of the module 20 at the housing 30.

The invention and the embodiment explained above can e.g. be used for measuring a level of an operating fluid of a motor vehicle (e.g. engine oil, brake fluid, cooling liquid, windscreen wiper fluid etc.).

## Claims

1. A device (10) for measuring a level (L) of a fluid (F) in a container, based on an acoustic measurement principle, comprising
- an acoustically active component (12) for transmitting a sound pulse into the fluid (F) and for receiving an echo of the sound pulse,
- an electronic circuit arrangement (14) for controlling the transmission of the sound pulse by providing a control signal to the acoustically active component (12) and for processing a reception signal provided by the acoustically active component (12) due to the receipt of the echo, wherein the acoustically active component (12) and the electronic circuit arrangement (14) are combined in a packaged module (20) provided with a plurality of electrical contact elements (22) protruding from an enclosure (24) of the packaged module (20),
wherein the device (10) further comprises a housing (30) provided with electrical conductors (32)embedded in or attached to the housing (30), wherein the electrical contact elements (22) of the packaged module (20) are electrically connected to the electrical conductors (32) of the housing (30), **characterized in that** the acoustically active component (12) is acoustically coupled to the housing (30) so that the sound pulse is only transmitted through the housing (30) to the fluid (F) beyond the housing (30) and the echo is received through the housing (30).

2. The device (10) according to claim 1, wherein the acoustically active component comprises a piezoelectric disc.

3. The device (10) according to any of the preceding claims, wherein the sound pulse is an ultrasonic sound pulse.

4. The device (10) according to any of the preceding claims, wherein the housing (30) is made of plastic.

5. The device (10)according to any of the preceding claims, further comprising an acoustic coupling layer (34) positioned between the enclosure (24) of the packaged module (20) and the housing (30).

6. The device (10) according to claim 5, wherein the acoustic coupling layer (34) is made of an adhesive.

7. The device (10) according to claim 5, wherein the acoustic coupling layer (34) is made of a gel-like substance.

8. The device (10) according to claim 5, wherein the acoustic coupling layer (34) is made of rubber.

9. The device (10) according to any of the preceding claims, wherein the electrical contact elements (22) of the packaged module (20) are electrically connected to the electrical conductors (32) of the housing (30) by means of welding, soldering, or gluing with an electrically conductive glue.

10. A method for measuring a level (L)of a fluid (F) in a container, based on an acoustic measurement principle, **characterized by** using a device (10) according to any of claims 1 to 9.

11. The method according to claim 10, wherein the fluid (F) is an operating fluid of a motor vehicle.

12. The method according to claim 10 or 11, wherein the fluid (F) is an engine oil.

## Patentansprüche

1. Vorrichtung (10) zum Messen eines Füllstands (L) einer Flüssigkeit (F) in einem Behälter basierend auf einem Schallmessprinzip, aufweisend:
- eine akustisch aktive Komponente (12) zum Sendern eines Schallimpulses in die Flüssigkeit (F) und zum Empfangen eines Echos des Schallimpulses,
- eine elektronische Schaltungsanordnung (14) zum Steuern der Übertragung des Schallimpulses durch Bereitstellen eines Steuersignals für die akustisch aktive Komponente (12) und zum Verarbeiten eines Empfangssignals, das von der akustisch aktiven Komponente (12) aufgrund des Empfangs des Echos bereitgestellt wird,
wobei die akustisch aktive Komponente (12) und die elektronische Schaltungsanordnung (14) in einem gepacktes Modul (20) kombiniert sind, das mit einer Mehrzahl von elektrischen Kontaktelementen (22) versehen ist, die von einer Einfassung (24) des gepackten Moduls (20) vorstehen,
wobei die Vorrichtung (10) ferner ein Gehäuse (30) aufweist, das mit elektrischen Leitern (32) versehen ist, die in das Gehäuse (30) eingebettet oder daran angebracht sind,
wobei die elektrischen Kontaktelemente (22) des gepackten Moduls (20) mit den elektrischen Leitern (32) des Gehäuses (30) elektrisch verbunden sind,
**dadurch gekennzeichnet, dass**
die akustisch aktive Komponente (12) mit dem Gehäuse (30) akustisch gekoppelt ist, so dass der Schallimpuls nur durch das Gehäuse (30) zur Flüssigkeit (F) jenseits des Gehäuses (30) gesendet und das Echo durch das Gehäuse (30) empfangen wird.

2. Vorrichtung (10) nach Anspruch 1, wobei die akustisch aktive Komponente eine piezoelektrische Scheibe aufweist.

3. Vorrichtung (10) nach einem der vorhergehenden Ansprüche, wobei der Schallimpuls ein Ultraschallimpuls ist.

4. Vorrichtung (10) einem der vorhergehenden Ansprüche, wobei das Gehäuse (30) aus Kunststoff hergestellt ist.

5. Vorrichtung (10) einem der vorhergehenden Ansprüche, ferner aufweisend eine akustische Kopplungsschicht (34), die zwischen der Einfassung (24) des gepackten Moduls (20) und dem Gehäuse (30) positioniert ist.

6. Vorrichtung (10) nach Anspruch 5, wobei die akustische Kopplungsschicht (34) aus einem Klebstoff hergestellt ist.

7. Vorrichtung (10) nach Anspruch 5, wobei die akustische Kopplungsschicht (34) aus einer gelartigen Substanz hergestellt ist.

8. Vorrichtung (10) nach Anspruch 5, wobei die akustische Kopplungsschicht (34) aus Kautschuk hergestellt ist.

9. Vorrichtung (10) einem der vorhergehenden Ansprüche, wobei die elektrischen Kontaktelemente (22) des gepackten Moduls (20) mit den elektrischen Leitern (32) des Gehäuses (30) durch Schweißen, Löten oder Kleben mit einem elektrisch leitenden Kleber elektrisch verbunden sind.

10. Verfahren zur Messung eines Füllstands (L) einer Flüssigkeit (F) in einem Behälter basierend auf einem Schallmessprinzip, **gekennzeichnet durch** Verwenden einer Vorrichtung (10) nach einem der Ansprüche 1 bis 9.

11. Verfahren nach Anspruch 10, wobei die Flüssigkeit (F) eine Betriebsflüssigkeit eines Kraftfahrzeugs ist.

12. Verfahren nach Anspruch 10 oder 11, wobei die Flüssigkeit (F) ein Motoröl ist.

## Revendications

1. Dispositif (10) pour mesurer un niveau (L) d'un fluide (F) dans un récipient, basé sur un principe de mesure acoustique, comprenant :
- un composant acoustiquement actif (12) pour transmettre une impulsion sonore dans le fluide (F) et pour recevoir un écho de l'impulsion sonore,
- un agencement de circuit électronique (14) pour commander la transmission de l'impulsion sonore en fournissant un signal de commande au composant acoustiquement actif (12) et pour traiter un signal de réception fourni par le composant acoustiquement actif (12) en raison de la réception de l'écho,
le composant acoustiquement actif (12) et l'agencement de circuit électronique (14) étant combinés dans un module encapsulé (20), muni d'une pluralité d'éléments de contact électrique (22) faisant saillie à partir d'une enceinte (24) du module encapsulé (20),
le dispositif (10) comprenant en outre un boîtier (30) pourvu de conducteurs électriques (32) encastrés dans ou fixés au boîtier (30),
les éléments de contact électrique (22) du module encapsulé (20) étant électriquement connectés aux conducteurs électriques (32) du boîtier (30),
**caractérisé en ce que** le composant acoustiquement actif (12) est couplé acoustiquement au boîtier (30) de sorte que l'impulsion sonore est seulement transmise à travers le boîtier (30) au fluide (F) au-delà du boîtier (30) et l'écho est reçu à travers le boîtier (30).

2. Dispositif (10) selon la revendication 1, le composant acoustiquement actif comprenant un disque piézoélectrique.

3. Dispositif (10) selon l'une quelconque des revendications précédentes, l'impulsion sonore étant une impulsion sonore ultrasonique.

4. Dispositif (10) selon l'une quelconque des revendications précédentes, le boîtier (30) étant en matière plastique.

5. Dispositif (10) selon l'une quelconque des revendications précédentes, comprenant en outre une couche de couplage acoustique (34) placée entre l'enveloppe (24) du module encapsulé (20) et le boîtier (30).

6. Dispositif (10) selon la revendication 5, la couche de couplage acoustique (34) étant constituée d'un adhésif.

7. Dispositif (10) selon la revendication 5, la couche de couplage acoustique (34) étant constituée d'une substance de type gel.

8. Dispositif (10) selon la revendication 5, la couche de couplage acoustique (34) étant constituée de caoutchouc.

9. Dispositif (10) selon l'une quelconque des revendications précédentes, les éléments de contact électrique (22) du module encapsulé (20) étant connectés électriquement aux conducteurs électriques (32) du boîtier (30) au moyen d'une soudure, d'un brasage ou d'un collage avec une colle conductrice de l'électricité.

10. Procédé pour mesurer un niveau (L) d'un fluide (F) dans un récipient, basé sur un principe de mesure acoustique, **caractérisé par** l'utilisation d'un dispositif (10) selon l'une quelconque des revendications 1 à 9.

11. Procédé selon la revendication 10, le fluide (F) étant un fluide de fonctionnement d'un véhicule à moteur.

12. Procédé selon la revendication 10 ou 11, le fluide (F) étant une huile de moteur.
